(19) **Europäisches Patentamt / European Patent Office / Office européen des brevets**

(11) **EP 2 224 293 B1**

(12) **FASCICULE DE BREVET EUROPEEN**

(45) Date de publication et mention de la délivrance du brevet:
**18.07.2012 Bulletin 2012/29**

(51) Int Cl.:
*G04B 17/06* (2006.01)     *F16F 1/14* (2006.01)
*F16F 1/10* (2006.01)

(21) Numéro de dépôt: **10004945.1**

(22) Date de dépôt: **29.04.2003**

(54) **Organe de régulation à balancier et à spiral plan pour mouvement d'horlogerie**

Unruh und flache Spiralfeder für Uhrwerk

Balance and flat hairspring regulator for a watch movement

(84) Etats contractants désignés:
**CH DE FR GB IT LI**

(43) Date de publication de la demande:
**01.09.2010 Bulletin 2010/35**

(62) Numéro(s) de document de la (des) demande(s) initiale(s) en application de l'article 76 CBE:
**03009603.6 / 1 473 604**

(73) Titulaire: **Patek Philippe SA Genève**
**1204 Genève (CH)**

(72) Inventeurs:
• **Musy, Jean-Pierre**
**1268 Begnins (CH)**
• **Maier, Frédéric**
**2000 Neuchâtel (CH)**

• **Belot, Michel**
**2013 Colombier (CH)**

(74) Mandataire: **Micheli & Cie SA**
**Rue de Genève 122**
**Case Postale 61**
**1226 Genève-Thônex (CH)**

(56) Documents cités:
**CH-A- 327 796      GB-A- 697 864**
**US-A- 3 154 912      US-A- 3 528 237**

• **E MICHEL & G MICHEL: "Spiraux plats concentriques sans courbes", BULLETIN ANNUEL DE LA SOCIÉTÉ SUISSE DE CHRONOMÉTRIE, vol. IV, 1957, - 1963, pages 162-169, XP002272279, Lausanne**

**Description**

La présente invention concerne un mouvement d'horlogerie comprenant un organe de régulation à balancier et spiral plan.

On sait que les spires d'un spiral plan se déforment de façon excentrique lorsque le spiral travaille. Cette déformation excentrique des spires, qui s'explique par le fait que le centre de gravité du spiral ne correspond pas au centre de rotation du balancier-spiral, perturbe le réglage du balancier-spiral et rend ce dernier anisochrone.

On pourrait ramener arbitrairement par décentrage le centre de gravité du spiral au centre de rotation du balancier, mais ceci ne résoudrait pas le problème car pendant le travail du spiral, le centre de gravité se déplacerait et ne correspondrait donc plus au centre de gravité de départ.

Deux solutions différentes ont été proposées pour maintenir les centres de gravité et de rotation confondus pendant le travail d'un spiral plan et ainsi rendre les déformations des spires concentriques :

- le spiral Breguet à courbe dite de Philips, dans lequel une courbe extérieure est ramenée dans un second plan par dessus le spiral plan ;
- le spiral à cornière exposé en 1958 par MM. Emile et Gaston Michel dans l'article « Spiraux plats concentriques sans courbes » publié par la Société Suisse de Chronométrie.

La première solution revient à modifier un spiral plan initial en un spiral s'étendant dans plusieurs plans. Cette solution n'entre pas dans le cadre de la présente invention qui ne s'intéresse qu'aux spiraux plans.

La seconde solution consiste à rigidifier une portion de spire déterminée en lui donnant la forme d'une cornière. Cette cornière est située soit sur la spire extérieure soit sur une spire centrale. Toutefois, de l'avis des auteurs de cette solution, si la cornière sur spire centrale apporte une nette amélioration en terme d'isochronisme du balancier-spiral, la cornière sur spire extérieure, elle, ne donne pas satisfaction. Lesdits auteurs ont même abandonné le spiral à cornière sur spire extérieure, considérant avoir travaillé en pure perte sur le sujet.

La présente invention vise à améliorer l'isochronisme d'un balancier-spiral par rigidification d'une portion de spire extérieure du spiral, et propose à cette fin un mouvement d'horlogerie tel que défini dans la revendication 1 annexée, des modes de réalisation particuliers étant définis dans les revendications dépendantes 2 à 14, ainsi qu'une pièce d'horlogerie, telle qu'une montre, incorporant le mouvement d'horlogerie précité.

La présente invention repose sur la constatation que, contrairement aux conclusions auxquelles sont arrivés les auteurs de l'article susmentionné « Spiraux plats concentriques sans courbes », il est possible d'améliorer sensiblement l'isochronisme d'un balancier-spiral par rigidification d'une portion déterminée de spire extérieure du spiral, à condition que l'écart entre la partie terminale de la spire extérieure et l'avant-dernière spire du spiral soit suffisamment grand pour que cette avant-dernière spire reste libre radialement lors d'expansions du spiral allant jusqu'à des amplitudes correspondant sensiblement à l'angle de rotation maximal du balancier dans le mouvement.

Selon les présents inventeurs, en effet, la raison pour laquelle la solution à cornière sur spire extérieure telle qu'exposée dans l'article précité n'a apporté aucune amélioration en terme d'isochronisme tient au fait que, lors d'expansions de grandes amplitudes du spiral, l'avant-dernière spire venait buter contre la spire extérieure ou contre un piton ou une goupille de raquette associé à cette spire extérieure, ce qui perturbait de façon importante le fonctionnement du spiral. Les présents inventeurs ont observé qu'en modifiant le spiral décrit dans l'article précité de telle sorte que l'expansion de l'avant-dernière spire ne soit pas gênée par la dernière spire (spire extérieure) ni par ses éléments accessoires tels que piton et goupilles de raquette, le fonctionnement du balancier-spiral devenait sensiblement isochrone.

La présente invention propose également un procédé de réalisation d'un mouvement d'horlogerie tel que défini dans la revendication 16 annexée, des modes de réalisation particuliers étant définis dans les revendications dépendantes correspondantes.

D'autres caractéristiques et avantages de la présente invention apparaîtront à la lecture de la description détaillée suivante faite en référence aux dessins annexés dans lesquels :

- la figure 1 est une vue plane d'un organe de régulation selon un premier mode de réalisation de l'invention ;
- la figure 2 est une vue plane montrant, à titre de comparaison, le spiral d'un organe de régulation conventionnel, en position de repos ;
- les figures 3 et 4 sont des vues planes montrant le spiral de la figure 2 respectivement en expansion et en compression, dans une situation théorique où le centre du spiral est libre, l'extrémité extérieure du spiral étant prise comme point de référence fixe ;
- la figure 5 est une vue plane montrant le spiral de l'organe de régulation selon le premier mode de réalisation de l'invention en position de repos ;
- les figures 6 et 7 sont des vues planes montrant le spiral de la figure 5 respectivement en expansion et en compression, dans une situation théorique où le centre du spiral est libre, l'extrémité extérieure du spiral étant prise comme point de référence fixe ;

- la figure 8 est une vue plane montrant le spiral d'un organe de régulation selon un second mode de réalisation de l'invention avec ses éléments accessoires ;
- la figure 9 est une vue plane schématique montrant comment est déterminée une portion de spire extérieure à rigidifier du spiral de l'organe de régulation selon l'invention ;
- les figures 10 à 12 sont des vues planes montrant différentes variantes d'une forme de spiral intermédiaire obtenue lors d'un procédé de conception de l'organe de régulation selon l'invention ;
- la figure 13 est une vue plane schématique montrant une expansion théorique d'un spiral intermédiaire obtenu lors du procédé de conception selon l'invention et dont la partie terminale de la spire extérieure n'a pas encore été corrigée ; et
- la figure 14 est une vue plane schématique montrant comment la partie terminale de la spire extérieure du spiral illustré à la figure 13 est corrigée pour permettre à l'avant-dernière spire de rester libre radialement lors d'expansions du spiral allant jusqu'à des amplitudes correspondant sensiblement à l'angle de rotation maximal du balancier associé.

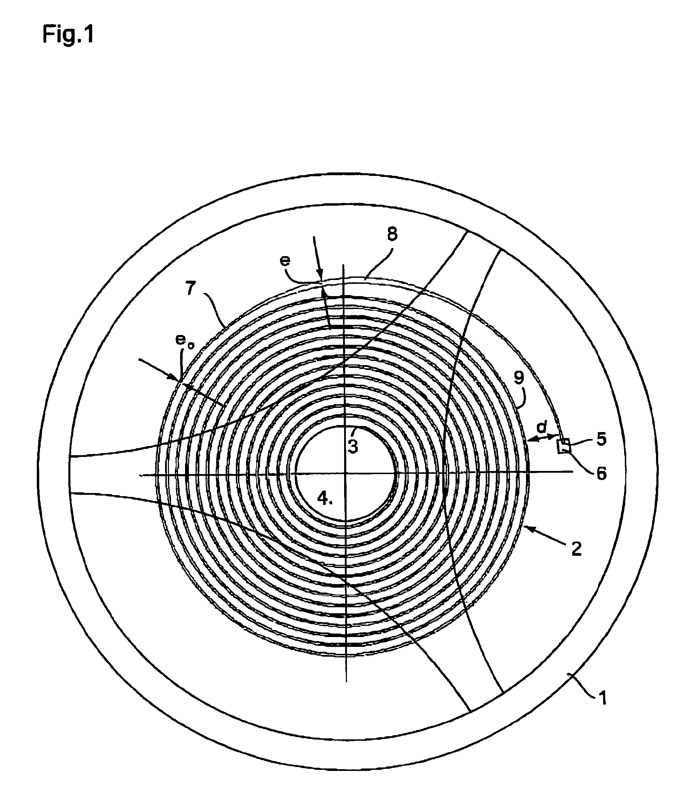

En référence à la figure 1, un organe de régulation pour mouvement d'horlogerie selon l'invention comprend un balancier 1 et un ressort spiral plat 2 en forme de spirale d'Archimède. L'extrémité intérieure 3 du spiral 2 est fixée à une virole 4 chassée sur l'axe du balancier 1 et est donc soumise en permanence au couple de rotation du balancier 1. De façon connue, l'axe de rotation du balancier-spiral tourne dans des paliers (non représentés). L'extrémité extérieure 5 du spiral 2 est fixée à une pièce fixe du mouvement, typiquement le coq, par l'intermédiaire d'un élément de fixation 6 appelé « piton ».

Selon l'invention, le spiral 2 comporte sur sa spire extérieure 7 une portion rigidifiée 8 agencée pour rendre les déformations des spires sensiblement concentriques lors d'expansions et de compressions du spiral 2. Cette portion rigidifiée 8 est constituée par une portion de la lame formant le spiral ayant une plus grande épaisseur e, dans le plan du spiral, que le reste de la lame. Cette épaisseur e est suffisamment grande par rapport à l'épaisseur $e_0$ du reste de la lame pour conférer à la portion rigidifiée 8 une rigidité bien supérieure au reste de la lame. Ainsi, lors d'expansions et de compressions du spiral, la portion rigidifiée 8 ne se déforme quasiment pas et ne participe donc pas à la déformation des spires. Dans l'exemple illustré, l'épaisseur e de la portion rigidifiée 8 est variable, son minimum, aux extrémités de la portion rigidifiée, étant égal à l'épaisseur $e_0$ du reste de la lame et son maximum, au centre de la portion rigidifiée, étant égal à trois fois l'épaisseur $e_0$ du reste de la lame. Toutefois, comme cela apparaîtra dans la suite, l'épaisseur e de la portion rigidifiée peut également être constante ou varier seulement dans des parties terminales de la portion rigidifiée. La surépaisseur que présente la portion rigidifiée 8 par rapport au reste de la lame est de préférence située exclusivement du côté extérieur de la dernière spire 7, afin d'éviter qu'elle puisse venir en contact avec l'avant-dernière spire, désignée par le repère 9. La manière dont est agencée la portion rigidifiée 8 le long du spiral 2 sera expliquée plus loin en relation avec le procédé selon l'invention.

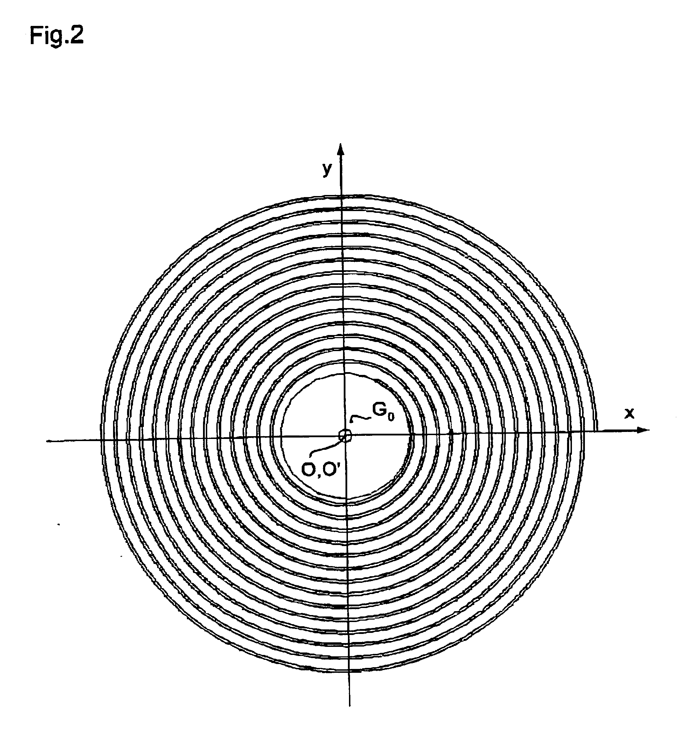

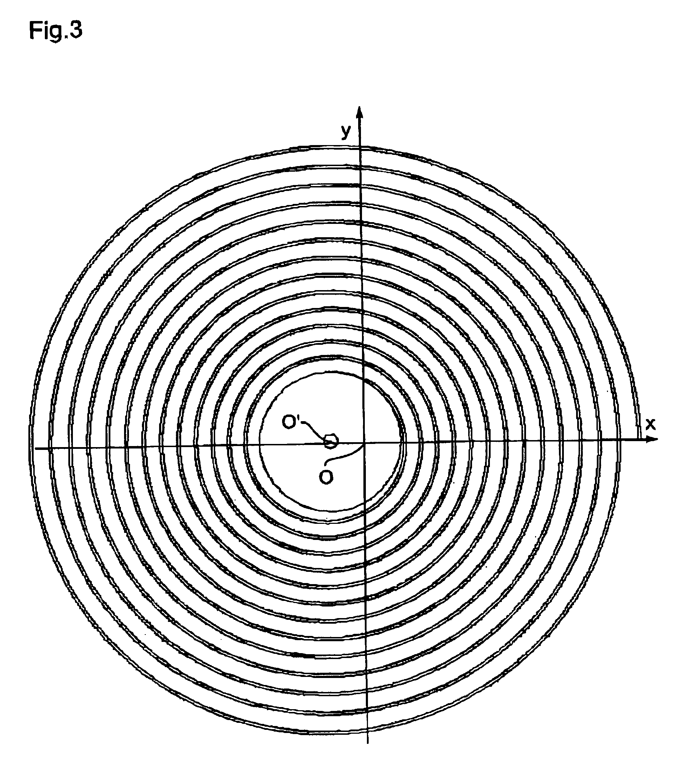

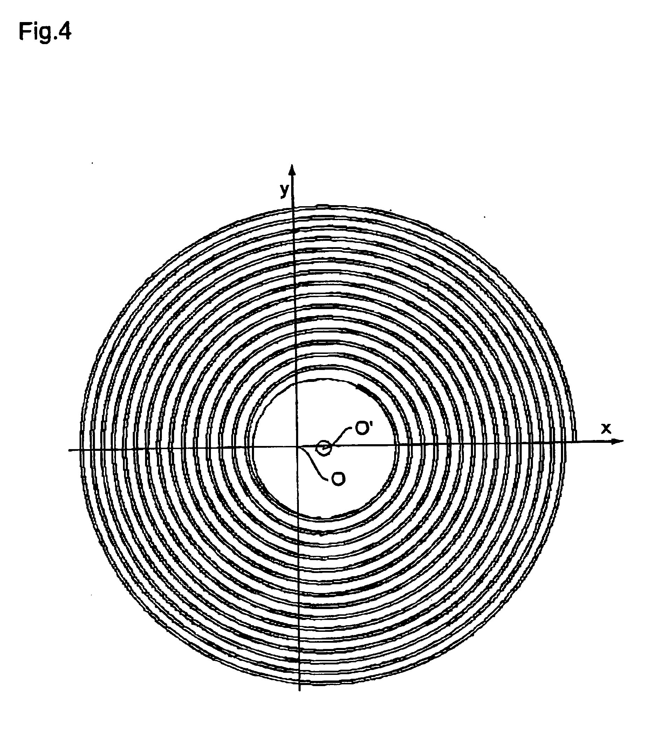

Comme expliqué dans la partie introductive de cette demande, la déformation des spires dans un spiral conventionnel est excentrique car le centre de gravité du spiral ne correspond pas avec son centre géométrique. Le centre géométrique du spiral est le centre du repère dans lequel est définie la spirale. Il est situé sur l'axe de rotation du balancier-spiral. La figure 2 montre à titre d'illustration un spiral conventionnel en forme de spirale d'Archimède en position de repos, ainsi que le repère associé (0, x, y) et le centre de gravité $G_0$ du spiral. Sur les figures 3 et 4, on a représenté ce même spiral respectivement en expansion d'un tour (360°) et en compression d'un tour après l'application d'un couple pur à l'extrémité intérieure du spiral, l'extrémité extérieure du spiral étant prise comme point de référence fixe. Par « couple pur » on entend que l'extrémité intérieure du spiral est libre, c'est-à-dire que l'on se place dans le cas théorique où l'axe du balancier-spiral est libre de se déplacer parallèlement au plan du spiral ou, en d'autres termes, n'est pas maintenu par des paliers. Comme on peut le voir, lors de telles expansion et compression, le centre géométrique O' du spiral, représenté par un point à l'intérieur d'un cercle, se déplace principalement le long de l'axe (O, x) - vers les x négatifs lors de l'expansion et vers les x positifs lors de la compression - et n'est donc plus confondu avec le centre O du repère. En pratique, comme le centre géométrique du spiral ne peut se déplacer en raison de la contrainte exercée par les paliers sur l'axe du balancier-spiral, la déformation des spires lors d'une expansion ou une compression du spiral est nécessairement excentrique, et non pas concentrique comme illustré aux figures 3 et 4.

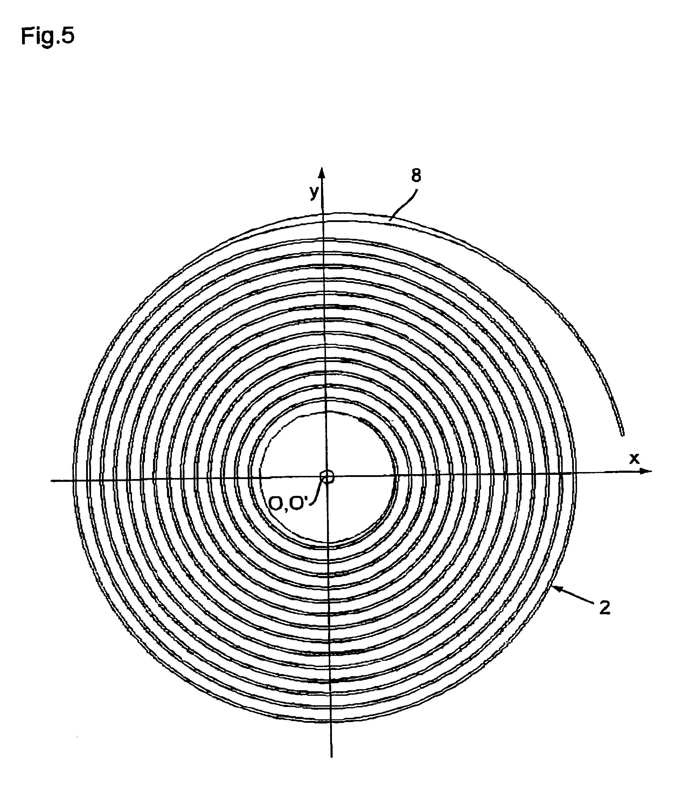

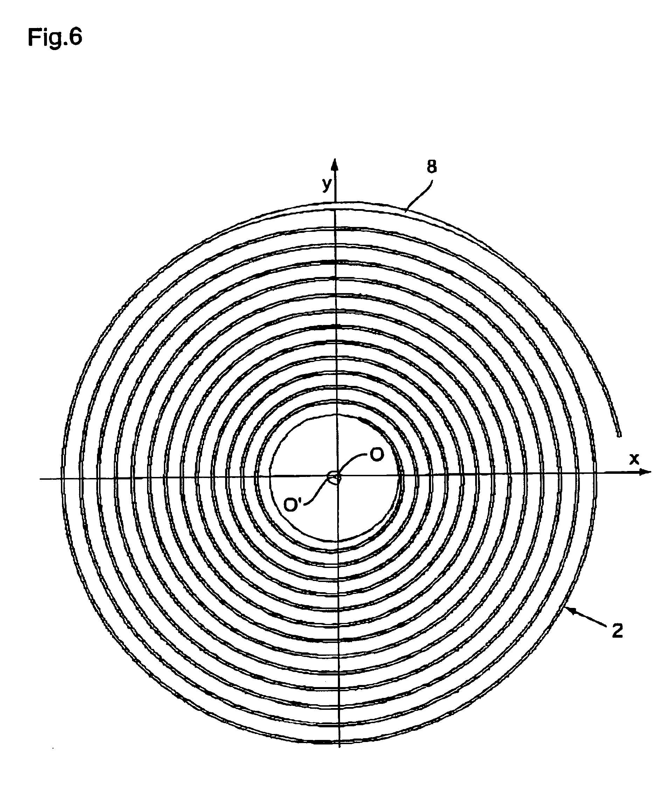

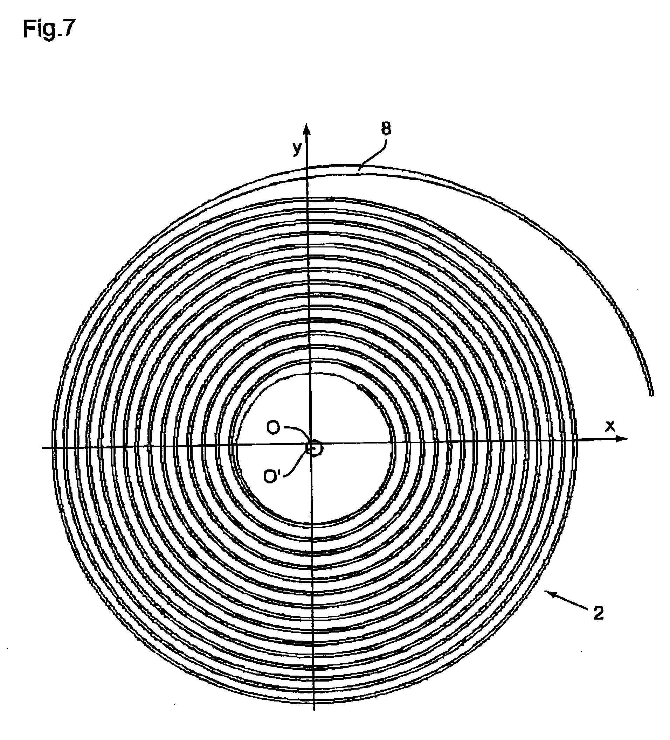

Dans la présente invention, la fonction de la portion rigidifiée 8 est de ramener le centre de déformation du spiral 2 au centre géométrique dudit spiral. Le centre de déformation du spiral est le centre de gravité de la partie élastique du spiral, c'est-à-dire de la partie du spiral autre que la portion rigidifiée 8. Les figures 5, 6 et 7 montrent le spiral 2 de l'organe de régulation selon l'invention respectivement au repos, en expansion après application d'un couple pur de même amplitude que dans le cas de la figure 3 (l'extrémité extérieure du spiral étant prise comme point de référence fixe, comme dans le cas de la figure 3), et en compression après application d'un couple pur de même amplitude que dans le cas de la figure 4 (l'extrémité extérieure du spiral étant prise comme point de référence fixe, comme dans le cas de la figure 4). On peut voir que le centre géométrique O' du spiral 2 reste quasiment immobile et confondu avec le centre O du repère lors de ces expansion et compression. Ceci implique qu'en pratique, la contrainte exercée par les paliers sur l'axe du balancier-spiral est suffisamment faible pour que les déformations des spires restent sensiblement concentriques, comme dans le cas théorique des figures 6 et 7. Il en découle une amélioration importante de l'isochronisme du balancier-spiral, qui travaillera en couple pur dans ses paliers sans subir de forces perturbatrices dues à la réaction d'encastrement.

En référence de nouveau à la figure 1, selon une autre caractéristique de l'invention, l'écart ou distance radial d entre une partie terminale de la spire extérieure 7 et l'avant-dernière spire 9 est suffisamment grand pour que cette avant-dernière spire 9 reste libre radialement lors d'expansions du spiral 2 allant jusqu'à des amplitudes correspondant sensiblement à l'angle de rotation maximal du balancier 1 dans le mouvement. Par « angle de rotation maximal » on entend l'angle maximal que le balancier 1 est susceptible d'atteindre dans des conditions normales de fonctionnement du mouvement. Cet angle est déterminé notamment par la force du ressort moteur (ressort de barillet) du mouvement. Il est inférieur à l'angle de rebattement. Dans un exemple de réalisation typique de l'invention, cet angle de rotation maximal est légèrement inférieur à l'angle de rebattement et est égal à environ 330˚. On rappelle que l'angle de rebattement est défini comme étant l'angle de rotation du balancier à partir duquel le rebattement se produit, c'est-à-dire, typiquement, l'angle à partir duquel l'ellipse du balancier entre en contact avec la face externe d'une corne de la fourchette de l'ancre d'échappement.

En d'autres termes, l'écart ou distance radial d est suffisamment grand pour que, pendant le fonctionnement normal du mouvement, l'avant-dernière spire 9 ne puisse entrer en contact ni avec la spire extérieure 7 ni avec le piton 6. Comme les expansions (et bien entendu aussi les compressions) de l'avant-dernière spire 9 ne sont entravées à aucun moment pendant le fonctionnement normal du mouvement, les déformations des spires restent toujours concentriques, d'où une amélioration sensible de l'isochronisme du balancier-spiral.

En pratique, afin de se réserver une marge de sécurité, on peut positionner la partie terminale de la spire extérieure 7 suffisamment loin de l'avant-dernière spire 9 pour que cette dernière ne puisse atteindre ladite partie terminale même lors d'expansions du spiral allant jusqu'à des amplitudes correspondant à l'angle de rotation maximum absolu du balancier, c'est-à-dire l'angle de rebattement.

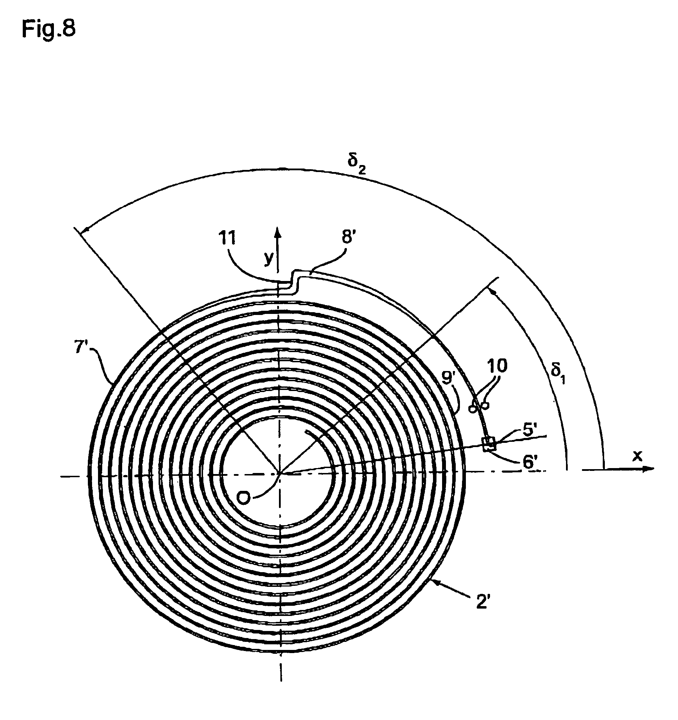

La figure 8 montre un second mode de réalisation de l'invention, dans lequel l'organe de régulation comprend notamment un spiral 2' à portion de spire extérieure rigidifiée 8', un piton 6' pour fixer l'extrémité extérieure 5' du spiral et une raquette, dont seules les goupilles 10 ont été représentées, pour le réglage de la longueur active du spiral 2'. La portion de spire extérieure rigidifiée 8' présente un double coude 11 dans sa partie centrale. Ce double coude 11 permet à la partie terminale de la spire extérieure 7', allant du double coude 11 à l'extrémité extérieure 5', d'une part d'être suffisamment éloignée de l'avant-dernière spire 9' pour que ni cette partie terminale ni ses éléments accessoires, piton 6' et goupilles 10, ne puissent gêner les expansions de l'avant-dernière spire 9', et d'autre part d'avoir une forme générale en arc de cercle de centre O adaptée à la rotation de la raquette. En variante, toutefois, la raquette avec ses goupilles 10 pourrait être supprimée.

On va maintenant décrire le procédé de conception des spiraux 2 et 2'.

En premier lieu, on définit une spirale d'Archimède dans un repère (O, x, y) selon la formule, connue en soi :

$$r\,(\vartheta) = r_0 + p\vartheta$$

où $r_0$ et p sont des constantes prédéterminées et r et $\vartheta$ sont les coordonnées polaires dans le repère (0, x, y).

On donne à cette spirale une épaisseur de lame $e_0$ dans le plan de la spirale et une hauteur de lame $h_0$ perpendiculairement au plan de la spirale. Ces valeurs $e_0$ et $h_0$ sont constantes sur toute la longueur de la spirale.

On calcule les coordonnées $(x_G, y_G)$ du centre de gravité G du spiral ainsi obtenu :

$$x_G = \frac{1}{L}\int_0^L x\,ds$$

$$y_G = \frac{1}{L}\int_0^L y\,ds$$

où L est la longueur du spiral et ds est la longueur élémentaire le long de ce spiral.

En utilisant les relations :

$$x = r\cos\vartheta$$

$$y = r\sin\vartheta,$$

et

$$ds = \sqrt{r^2(d\vartheta)^2 + (dr)^2} = \sqrt{r^2(d\vartheta)^2 + p^2(d\vartheta)^2}$$

on peut écrire les coordonnées $x_G$ et $y_G$ également de la façon suivante :

$$x_G = \frac{1}{L}\int_0^{2\pi N} r\cos\vartheta\sqrt{r^2(d\vartheta)^2 + p^2(d\vartheta)^2}$$

$$y_G = \frac{1}{L}\int_0^{2\pi N} r\sin\vartheta\sqrt{r^2(d\vartheta)^2 + p^2(d\vartheta)^2}$$

où N est le nombre de tours réel du spiral.

On déduit ensuite le balourd du spiral, calculé au centre de gravité G :

$$\vec{b}_G = m\overline{OG}$$

où m est la masse totale du spiral : $m = \rho e_0 h_0 L$ où est la densité de masse du spiral, et le vecteur $\overline{OG}$, défini par les points O et G (que l'on considère situés dans un même plan, parallèle au plan du spiral), a pour module :

$$a = \sqrt{x_G^2 + y_G^2}.$$

Puis l'on va déterminer une portion de spire extérieure à rendre inactive pour que ce balourd $\overline{b}_G$, responsable de l'anisochronisme du balancier-spiral, devienne nul. Cette portion de spire extérieure sera ensuite renforcée pour qu'elle perde son élasticité et constitue une « zone morte » ne participant pas aux déformations de la spire extérieure,

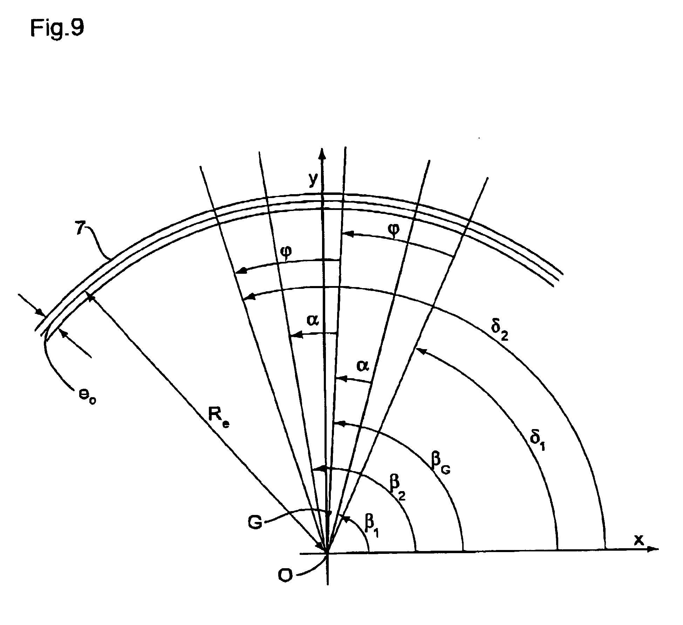

Pour annuler le balourd $\overline{b}_G$, la portion de spire à rendre inactive doit avoir un balourd $\vec{b}$ égal au balourd $\vec{b}_G$. Cette portion de spire est nécessairement telle que le point G soit situé entre le point O et cette portion de spire et a une étendue angulaire $\beta_2 - \beta_1 = 2\alpha$ (cf. figure 9) symétrique par rapport à l'axe passant par les points O et G.

En assimilant cette portion de spire extérieure à un arc de cercle de rayon moyen (rayon à mi-épaisseur) $R_e$, de centre O et de masse $\Delta m$, le module de son balourd b est égal à $R_e\Delta m$, où :

$$\Delta m = \rho e_0 h_0 \Delta L \text{ avec } \Delta L = R_e(\beta_2 - \beta_1) = 2R_e\alpha$$

On a ainsi :

$$R_e \Delta m = ma = \varrho e_0 h_0 La$$

soit :

$$2R_\bullet^2 \alpha = La$$

d'oû :

$$\alpha = \frac{La}{2R_\bullet^2}$$

et :

$$\beta_1 = \beta_G - \alpha$$

$$\beta_2 = \beta_G + \alpha$$

où $\beta_G$ est la position angulaire du point G : $\beta_G = \text{Arctan}(y_G / x_G)$

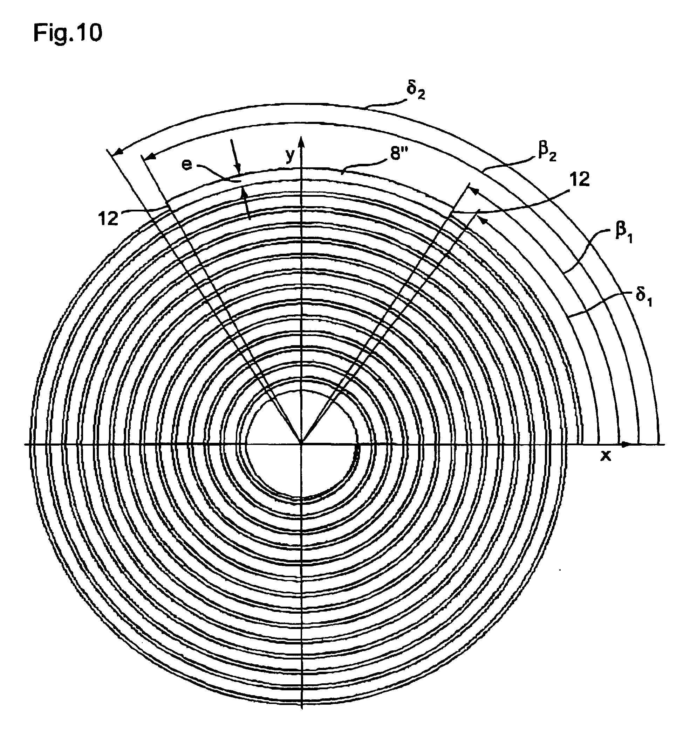

On renforce ensuite la section de la portion de spire extérieure délimitée par les angles $\beta_1$ et $\beta_2$ en donnant à cette portion de spire extérieure une épaisseur e, dans le plan du spiral, supérieure à l'épaisseur $e_0$, par exemple égale à trois fois l'épaisseur $e_0$. La figure 10 montre le spiral ainsi obtenu, avec la portion rigidifiée désignée par le repère 8".

De préférence, afin d'éviter, ou à tout le moins réduire le risque, que le spiral se casse lors de sa fabrication ou de son fonctionnement au niveau des extrémités droites, orientées radialement, 12 de la portion rigidifiée 8", on corrige la forme de la portion rigidifiée 8" pour adoucir la transition entre cette dernière et le reste de la lame. Cette correction de forme de la portion rigidifiée 8" est typiquement effectuée de la manière suivante :

Dans un premier temps, on choisit une fonction $f = e(\vartheta)$ représentative de l'épaisseur, dans le plan du spiral, de la portion rigidifiée corrigée en fonction de l'angle polaire $\vartheta$. Cette fonction f est convexe et continue, et présente un minimum, égal à l'épaisseur $e_0$, aux deux extrémités de la portion rigidifiée.

Puis l'on calcule l'étendue angulaire $\delta_2 - \delta_1$ de cette portion rigidifiée corrigée. Cette étendue angulaire $\delta_2 - \delta_1$ inclut l'étendue angulaire $\beta_2 - \beta_1$ de la portion rigidifiée 8" illustrée à la figure 10 ; en d'autres termes, on a $\delta_1 < \beta_1$ et $\delta_2 > \beta_2$ (cf. figures 9 et 10).

Pour déterminer les angles $\delta_1$ et $\delta_2$, on part du principe que la portion rigidifiée corrigée doit se déformer de la même manière que la portion de spire délimitée par ces angles $\delta_1$ et $\delta_2$ dans le spiral de la figure 10. En supposant la rigidité de la portion rigidifiée 8" infinie, ce qui est la valeur théorique idéale, la déformation de la portion de spire du spiral de la figure 10 entre les angles $\delta_1$ et $\delta_2$ est égale à la somme des déformations respectives des portions de spire entre les angles $\delta_1$ et $\beta_1$ et entre les angles $\beta_2$ et $\delta_2$. La composante selon l'axe (0, x) de cette déformation peut ainsi s'écrire de la façon suivante :

$$D_x^{e_0} = \frac{12M}{h_0 e_0^3}\left[\int_{\delta_1}^{\beta_1} yds + \int_{\beta_2}^{\delta_2} yds\right]$$

où M est le moment de déformation ou couple appliqué au spiral et, comme déjà indiqué, $y = r\sin\vartheta$ avec $r = r_0 + p\vartheta$. Quant à la composante selon l'axe (O, x) de la déformation de la portion rigidifiée corrigée, elle peut s'écrire comme suit :

$$D_x^f = \frac{12M}{h_0} \int_{\delta_1}^{\delta_2} \frac{yds}{f^3}$$

Les composantes des déformations précitées selon l'axe (O, y) peuvent être ignorées car elles sont négligeables et du même ordre de grandeur que les erreurs de production. Pour réduire le nombre de variables, on décide que l'angle $\delta_2$ - $\delta_1$ sera symétrique par rapport à l'axe passant par les points O et G. Ainsi, on peut définir une unique variable $\varphi$ égale à $\beta_G$ - $\delta_1$ et à $\delta_2$ - $\beta_G$. Cette variable $\varphi$ est calculée en égalant les composantes de déformation $D_x^{e_0}$ et $D_x^f$ :

$$\frac{1}{e_0^3}\left[\int_{\beta_G - \varphi}^{\beta 1} yds + \int_{\beta 2}^{\varphi + \beta_G} yds\right] = \int_{\beta_G - \varphi}^{\varphi + \beta_G} \frac{yds}{f^3}$$

Pour résoudre l'équation ci-dessus, on peut effectuer un calcul itératif, en partant d'une valeur $\varphi$ donnée, suffisamment grande par rapport à la longueur de la portion rigidifiée 8", puis en diminuant pas à pas cette valeur $\varphi$ jusqu'à ce que les deux composantes de $D_x^{e_0}$ déformation et $D_x^f$ soient suffisamment proches l'une de l'autre. Typiquement, on arrête l'algorithme d'itération dès que l'on a :

$$\left|D_x^{e_0} - D_x^f\right| < \varepsilon$$

où :

$$\varepsilon = \frac{10^{-5}\left(\left|D_x^{e_0}\right| + \left|D_x^f\right|\right)}{2}$$

Une fois la valeur $\varphi$ finale déterminée, on redessine la portion rigidifiée en lui donnant, entre les angles $\delta_1$ et $\delta_2$, l'épaisseur variable $e(\vartheta) = f$.

On donne ci-dessous, à titre d'exemple, une fonction f convenant particulièrement pour l'épaisseur variable de la portion rigidifiée corrigée :

$$f = e_0 + e_0\left\{1 + \cos\left[2\pi \frac{(\vartheta - \beta_G)}{\delta_2 - \delta_1}\right]\right\}$$

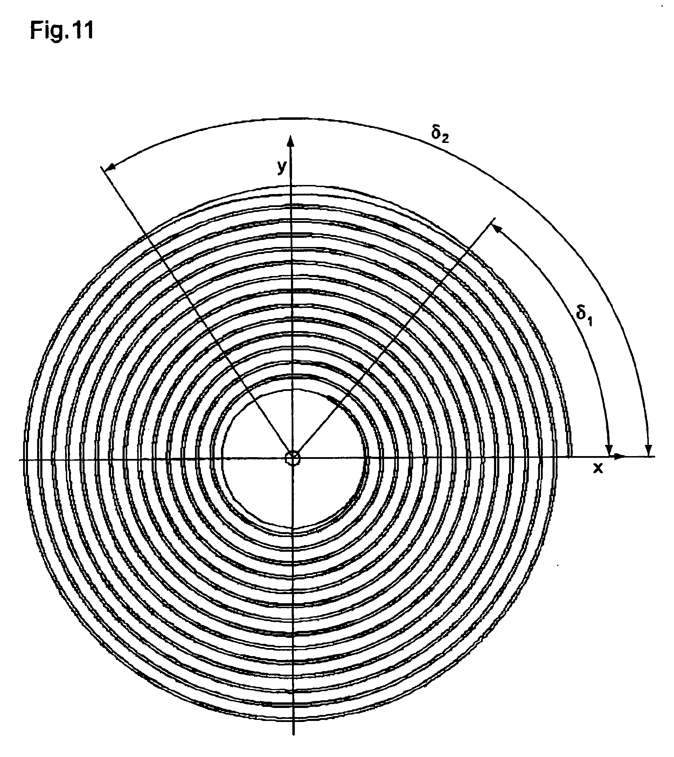

Cette fonction f présente un minimum, égal à l'épaisseur $e_0$, aux deux extrémités de la portion rigidifiée corrigée et un maximum, égal à trois fois l'épaisseur $e_0$, au centre de la portion rigidifiée corrigée. Cette fonction f a l'avantage d'être convexe sur toute la longueur de la portion rigidifiée corrigée, c'est-à-dire en tout point de cette longueur, ce qui minimise les risques de rupture. La figure 11 montre le spiral obtenu à l'issue de l'étape de correction de la portion rigidifiée avec une telle fonction.

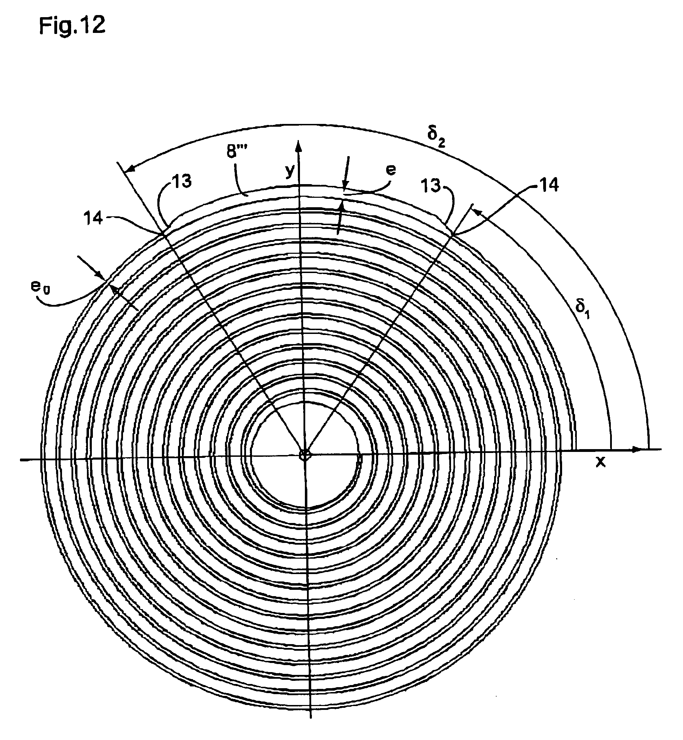

L'homme du métier observera toutefois que d'autres fonctions f convexes peuvent également convenir. La figure 12 montre, à titre d'exemple, un spiral obtenu à l'issue de l'étape de correction de la portion rigidifiée avec une fonction f telle que l'épaisseur e de la portion rigidifiée corrigée, désignée par le repère 8''', soit constante sur toute la longueur de cette dernière, sauf au niveau de parties terminales 13, où elle diminue continûment en direction des extrémités 14 de ladite portion 8'''.

On notera qu'ainsi corrigée, au moyen de l'une ou l'autre des fonctions mentionnées ci-dessus, la portion rigidifiée présente l'avantage non seulement de réduire le risque de rupture du spiral, mais également de présenter une rigidité supérieure à celle de la portion rigidifiée 8" illustrée à la figure 10, grâce au fait que l'on peut calculer son étendue angulaire sur la base d'une rigidité infinie pour la portion rigidifiée 8".

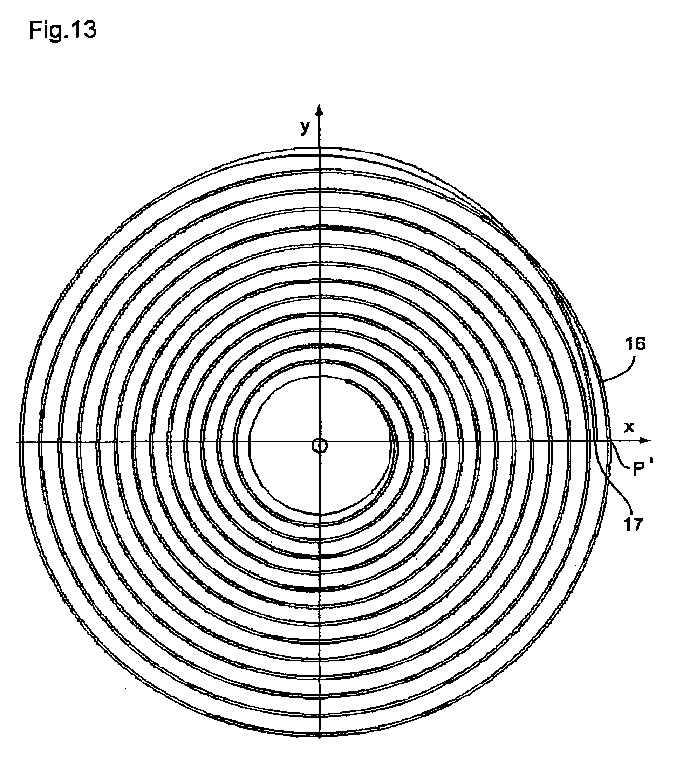

Une fois la correction de la portion rigidifiée effectuée, on simule, par exemple par un calcul d'éléments finis, une expansion maximale du spiral, correspondant à l'angle de rotation maximal du balancier, et l'on corrige la forme de la partie terminale de la spire extérieure de sorte que cette partie terminale soit suffisamment éloignée de l'avant-dernière spire pour que, comme expliqué précédemment, ni cette partie terminale ni ses éléments accessoires (piton, goupilles de raquette) ne puissent gêner les expansions de l'avant-dernière spire. Cette correction de la forme de la partie terminale est toutefois suffisamment faible pour ne pas modifier sensiblement le balourd du spiral et de la portion rigidifiée. La figure 13 montre, à titre d'illustration, l'expansion théorique d'un spiral comportant une portion rigidifiée sur sa spire extérieure mais dans lequel la partie terminale de la spire extérieure, dont la forme n'a pas encore été corrigée, n'est pas suffisamment éloignée de l'avant-dernière spire. Comme on peut le voir, l'avant-dernière spire, désignée par le repère 16, s'étend au-delà de la position de l'extrémité 17 (considérée comme fixe) de la spire extérieure, ce qui signifie qu'en pratique, cette avant-dernière spire 16 vient buter contre ladite extrémité 17 ou contre le piton auquel est rattachée ladite extrémité 17.

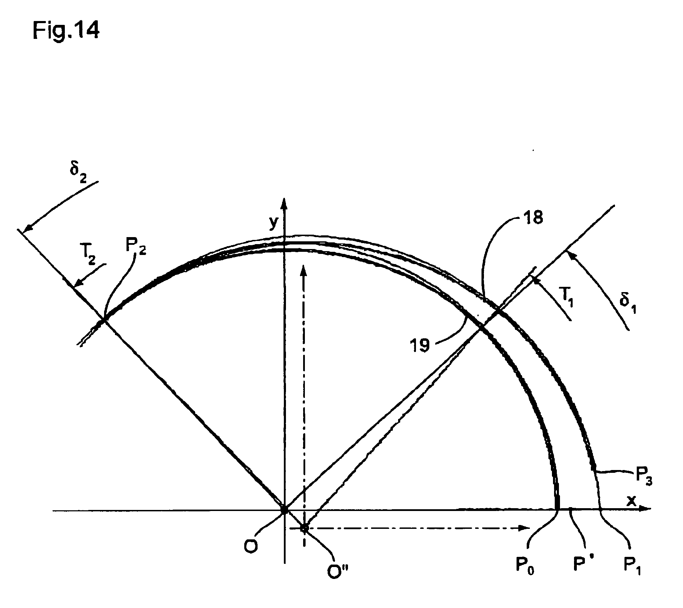

Pour éloigner la partie terminale de la spire extérieure de l'avant-dernière spire, on peut procéder de la façon suivante (cf. figure 14) :

- On définit sur l'axe radial passant par l'extrémité extérieure du spiral un premier point $P_1$ situé au-delà de l'avant-dernière spire lorsque le spiral est en expansion maximale, c'est-à-dire lorsque le balancier atteint son angle de rotation maximal (on se place, pour cela, dans une situation théorique où l'avant-dernière spire n'est pas gênée radialement et est donc en expansion maximale, comme dans l'exemple de la figure 13), et à une distance de cette avant-dernière spire, également lorsque le spiral est en expansion maximale, par exemple d'environ un pas de spirale. Sur la figure 14, la position de l'extrémité extérieure du spiral est désignée par le repère $P_0$ et la position du point d'intersection entre l'avant-dernière spire et l'axe radial précité lorsque le spiral est en expansion maximale est désignée par le repère P' (cette position P' est également représentée à la figure 13).
- On définit un second point $P_2$, situé sur la spire extérieure à l'extrémité de la portion rigidifiée la plus éloignée de l'extrémité extérieure du spiral,
- On raccorde les premier et second points $P_1$, $P_2$ par un arc de cercle 18 tangent à la spire extérieure au niveau du second point $P_2$. Le centre de cet arc de cercle 18 est désigné à la figure 14 par la repère O".
- On définit un troisième point $P_3$ sur l'arc de cercle 18 entre les premier et second points $P_1$, $P_2$, ce troisième point $P_3$ étant tel que la longueur du segment de l'arc de cercle 18 délimité par les second et troisième points $P_2$, $P_3$ soit égale à la longueur du segment de spire initial 19 délimité par le second point $P_2$ et l'extrémité extérieure initiale $P_0$ du spiral.
- On définit dans un repère de centre 0" dont les axes sont parallèles au repère (O, x, y), deux angles $T_1$, $T_2$. L'angle $T_2$ est l'angle que fait le segment de droite [O", $P_2$] avec l'axe des abscisses du repère de centre O". L'angle $T_1$ est tel que la longueur de la portion de l'arc de cercle 18 délimitée par les angles $T_1$ et $T_2$ soit égale à la longueur de la portion du segment de spire initial 19 délimitée, dans le repère (O, x, y), par les angles $\delta_1$ et $\delta_2$.
- On donne à l'arc de cercle 18, entre les second et troisième points $P_2$, $P_3$, une épaisseur identique à celle du segment de spire initial 19. Cette épaisseur est donc variable entre les angles $T_1$ et $T_2$ et constante ailleurs. La fonction $fc = e(\vartheta")$ définissant ladite épaisseur variable entre les angles $T_1$ et $T_2$ en fonction de l'angle polaire $\vartheta"$ dans le repère précité de centre O", est obtenue en remplaçant dans la fonction f définissant l'épaisseur variable de la portion du segment de spire initial 19 délimitée par les angles $\delta_1$ et $\delta_2$, les paramètres $\beta_G$, $\delta_1$ et $\delta_2$ par, respectivement, $\vartheta_0"$, $T_1$ et $T_2$, où $\vartheta_0"=(T_1+T_2)/2$. Ainsi, par exemple, dans le cas d'une fonction f égale à

$$e_0 + e_0 \left\{ 1 + \cos\left[ 2\pi \frac{(\vartheta - \beta_G)}{\delta_2 - \delta_1} \right] \right\},$$ la fonction fc est égale à $$e_0 + e_0 \left\{ 1 + \cos\left[ 2\pi \frac{(\vartheta" - \vartheta_0")}{T_2 - T_1} \right] \right\}.$$

- Le segment de spire délimité par les second et troisième points $P_2$, $P_3$ constitue alors la partie terminale corrigée de la spire extérieure.

En variante, afin d'obtenir le spiral illustré à la figure 8, on peut procéder de la manière suivante pour l'éloignement de la partie terminale de la spire extérieure de l'avant-dernière spire :

- On définit un point sur la spire extérieure dans la portion rigidifiée, typiquement au centre de cette dernière.
- On décale radialement vers l'extérieur la partie terminale du spiral s'étendant depuis ledit point, en donnant au côté intérieur de cette partie terminale une forme en arc de cercle de centre O et au côté extérieur de cette partie terminale une forme donnant à cette partie terminale la même épaisseur que celle de la partie terminale initiale correspondante. Cette épaisseur est ainsi variable entre ledit point et l'angle $\delta_1$ et constante entre l'angle $\delta_1$ et l'extrémité extérieure du spiral. L'écart radial entre cette partie terminale et l'avant-dernière spire est choisi suffisamment grand pour que cette dernière ne puisse atteindre ladite partie terminale même lorsque le spiral est en expansion maximum.

- On raccorde la partie terminale précitée avec le reste de la portion rigidifiée par une portion droite de façon à former le double coude 11. Cette portion droite a une épaisseur suffisamment grande pour ne pas diminuer la rigidité de la portion rigidifiée, par exemple égale à trois fois l'épaisseur $e_0$ de la partie du spiral autre que la portion rigidifiée.

Le spiral de l'organe de régulation selon l'invention est typiquement réalisé en silicium. Sa fabrication peut être effectuée de différentes manières, par exemple selon la méthode décrite dans la document EP 0 732 635.

La présente invention a été décrite ci-dessus à titre d'exemple uniquement. Il apparaîtra clairement à l'homme du métier que des modifications peuvent être faites sans sortir du cadre de l'invention. En particulier, bien qu'il soit préférable que la portion rigidifiée soit formée par une augmentation de l'épaisseur de la lame formant le spiral dans le plan du spiral, on pourrait, en variante, augmenter la hauteur de la lame (c'est-à-dire l'épaisseur de la lame perpendiculairement au plan du spiral), Dans ce cas bien entendu, la hauteur de la lame devrait être augmentée de façon relativement importante pour obtenir une rigidité comparable à celle obtenue dans le cas d'une épaisseur variable dans le plan du spiral, Dans une autre variante, on pourrait faire varier à la fois l'épaisseur de la lame dans le plan du spiral et la hauteur de ladite lame.

## Revendications

1. Mouvement d'horlogerie comprenant un organe de régulation comprenant un balancier (1) et un spiral plan (2), le spiral plan (2) comprenant sur sa spire extérieure (7) une portion rigidifiée (8) agencée pour rendre les déformations des spires sensiblement concentriques, cette portion rigidifiée (8) se terminant avant l'extrémité extérieure (5) du spiral (2), **caractérisé en ce que** l'écart (d) entre une partie terminale de la spire extérieure (7) et l'avant-dernière spire (9) du spiral (2) est suffisamment grand pour que cette avant-dernière spire (9) reste libre radialement lors d'expansions du spiral (2) allant jusqu'à des amplitudes correspondant sensiblement à l'angle de rotation maximal du balancier (1) dans ledit mouvement.

2. Mouvement d'horlogerie selon la revendication 1, **caractérisé en ce que** l'angle de rotation maximal du balancier (1) dans ledit mouvement est légèrement inférieur à l'angle de rebattement.

3. Mouvement d'horlogerie selon la revendication 1 ou 2, **caractérisé en ce que** l'angle de rotation maximal du balancier (1) dans ledit mouvement est sensiblement égal à 330˚.

4. Mouvement d'horlogerie selon l'une quelconque des revendications 1 à 3, **caractérisé en ce que** l'écart (d) entre la partie terminale de la spire extérieure (7) et l'avant-dernière spire (9) du spiral (2) est suffisamment grand pour que cette avant-dernière spire (9) reste libre radialement lors d'expansions du spiral (2) allant jusqu'à des amplitudes correspondant sensiblement à l'angle de rebattement du balancier (1) dans ledit mouvement.

5. Mouvement d'horlogerie selon l'une quelconque des revendications 1 à 4, **caractérisé en ce que** la portion rigidifiée (8) est une portion de lame dont l'épaisseur (e) dans le plan du spiral (2) est supérieure à celle ($e_0$) du reste de la lame formant le spiral (2).

6. Mouvement d'horlogerie selon la revendication 5, **caractérisé en ce que** l'épaisseur (e), dans le plan du spiral (2), de la portion rigidifiée (8) varie sur toute la longueur de la portion rigidifiée (8) comme une fonction convexe et continue et présente un minimum, sensiblement égal à l'épaisseur ($e_0$) du reste de la lame, aux deux extrémités de la portion rigidifiée (8) et un maximum, supérieur à l'épaisseur ($e_0$) du reste de la lame, entre lesdites deux extrémités.

7. Mouvement d'horlogerie selon la revendication 5, **caractérisé en ce que** l'épaisseur (e), dans le plan du spiral, de la portion rigidifiée (8") est sensiblement constante sur toute la longueur de ladite portion rigidifiée (8").

8. Mouvement d'horlogerie selon la revendication 5, **caractérisé en ce que** l'épaisseur (e), dans le plan du spiral (2), de la portion rigidifiée (8''') est sensiblement constante sur toute la longueur de ladite portion rigidifiée (8'''), sauf dans des parties terminales (13) où, respectivement, l'épaisseur (e) diminue continûment en direction des extrémités (14) de ladite portion rigidifiée (8''').

9. Mouvement d'horlogerie selon l'une quelconque des revendications 5 à 8, **caractérisé en ce que** la surépaisseur que définit la portion rigidifiée (8) par rapport au reste de la lame est située exclusivement sur le côté extérieur de la spire extérieure (7).

**10.** Mouvement d'horlogerie selon l'une quelconque des revendications 5 à 9, **caractérisé en ce que** la hauteur du spiral est sensiblement constante sur toute la longueur dudit spiral.

**11.** Mouvement d'horlogerie selon l'une quelconque des revendications 1 à 10, **caractérisé en ce que** le spiral (2) est en silicium.

**12.** Mouvement d'horlogerie selon l'une quelconque des revendications 1 à 11, **caractérisé en ce que** l'épaisseur de la portion rigidifiée (8"), ou un maximum de cette épaisseur (8 ; 8' ; 8'''), est égal à au moins trois fois l'épaisseur ($e_0$) du reste de la lame formant le spiral (2).

**13.** Mouvement d'horlogerie selon l'une quelconque des revendications 1 à 12, **caractérisé en ce que** la portion rigidifiée (8) est suffisamment rigide pour quasiment ne pas se déformer lors du fonctionnement du mouvement, et est agencée pour que le reste du spiral (2), constituant la partie élastique du spiral (2), ait un centre de gravité qui soit sensiblement confondu avec le centre géométrique du spiral (2).

**14.** Mouvement d'horlogerie selon l'une quelconque des revendications 1 à 13, **caractérisé en ce que** le spiral (2 ; 2') est en forme de spirale d'Archimède et **en ce qu'**un segment de la spire extérieure (7 ; 7') comprenant au moins une partie de la portion rigidifiée (8 ; 8') et s'étendant jusqu'à l'extrémité extérieure (5 ; 5') du spiral est éloigné de l'avant-dernière spire (9 ; 9') par rapport au tracé de la spirale d'Archimède.

**15.** Pièce d'horlogerie, telle que montre, comprenant un mouvement d'horlogerie selon l'une quelconque des revendications 1 à 14.

**16.** Procédé de réalisation d'un mouvement d'horlogerie comprenant un organe de régulation à balancier (1) et spiral plan (2), procédé selon lequel on réalise le spiral (2) avec une portion rigidifiée (8) sur sa spire extérieure (7) pour rendre les déformations des spires sensiblement concentriques, cette portion rigidifiée (8) se terminant avant l'extrémité extérieure (5) du spiral (2), **caractérisé en ce que** l'on réalise le spiral (2) avec en outre un écart (d) suffisamment grand entre une partie terminale de la spire extérieure (7) et l'avant-dernière spire (9) du spiral (2) pour que cette avant-dernière spire (9) reste libre radialement lors d'expansions du spiral (2) allant jusqu'à des amplitudes correspondant sensiblement à l'angle de rotation maximal du balancier (1) dans ledit mouvement.

**17.** Procédé selon la revendication 16, **caractérisé en ce que** pour concevoir le spiral plan (2) avec la portion rigidifiée (8"), on met en oeuvre les étapes suivantes :

- définir un spiral plan à section de lame constante,
- déterminer le balourd de ce spiral plan,
- déterminer une portion de spire extérieure de ce spiral plan ayant le même balourd que le spiral plan, et
- rigidifier cette portion de spire extérieure.

**18.** Procédé selon la revendication 17, **caractérisé en ce que** l'étape de rigidification de la portion de spire extérieure consiste à augmenter son épaisseur (e) dans le plan du spiral (2).

**19.** Procédé selon la revendication 16, **caractérisé en ce que** pour concevoir le spiral plan (2) avec la portion rigidifiée (8), on met en oeuvre les étapes suivantes :

- définir un spiral plan à section de lame constante,
- déterminer le balourd de ce spiral plan,
- déterminer une portion de spire extérieure de ce spiral plan ayant le même balourd que le spiral plan cette portion étant définie par deux angles $\beta_1$ et $\beta_2$ mesurés à partir de l'extrémité extérieure du spiral, et
- entre un angle $\delta_1$ et un angle $\delta_2$ tels que $\delta_1 < \beta_1$ et $\delta_2 > \beta_2$, où $\beta_2 - \beta_1$ est l'étendue angulaire de ladite portion de spire extérieure, faire varier l'épaisseur (e), dans le plan du spiral, de la lame formant le spiral selon une fonction f prédéterminée présentant un minimum, sensiblement égal à l'épaisseur ($e_0$) du reste de la lame, aux angles $\delta_1$ et $\delta_2$, la fonction f et les angles $\delta_1$ et $\delta_2$ étant choisis pour que la déformation de la portion de spire délimitée par les angles $\delta_1$ et $\delta_2$ soit sensiblement la même que celle qui se produirait si l'épaisseur de la lame entre les angles $\delta_1$ et $\beta_1$ et entre les angles $\beta_2$ et $\delta_2$ était la même que celle du reste du spiral et si, entre les angles $\beta_1$ et $\beta_2$, la rigidité de la spire extérieure était égale à une valeur prédéterminée, supérieure à celle du reste de la lame.

**20.** Procédé selon la revendication 19, **caractérisé en ce que** ladite valeur prédéterminée est infinie.

**21.** Procédé selon la revendication 19 ou 20, **caractérisé en ce que** la fonction f prédéterminée est convexe et continue.

**22.** Procédé selon l'une quelconque des revendications 16 à 21, **caractérisé en ce que** pour déterminer un écart (d) suffisant entre la partie terminale de la spire extérieure (7) et l'avant-dernière spire (9), on met en oeuvre les étapes suivantes :

- définir sur l'axe radial passant par l'extrémité extérieure ($P_0$) d'un spiral plan initial à portion rigidifiée (8) un premier point ($P_1$) situé au-delà de l'avant-dernière spire de ce spiral plan initial lorsque cette avant-dernière spire est en expansion d'amplitude correspondant à l'angle de rotation maximal du balancier ;
- définir un second point ($P_2$) sur la spire extérieure ;
- raccorder les premier et second points ($P_1$, $P_2$) par un arc de cercle (18) tangent à la spire extérieure au niveau du second point ($P_2$) ;
- définir un troisième point ($P_3$) sur l'arc de cercle (18) entre les premier et second points ($P_1$, $P_2$), ce troisième point ($P_3$) étant tel que la longueur du segment de l'arc de cercle (18) délimité par les second et troisième points ($P_2$, $P_3$) soit égale à la longueur du segment de spire initial (19) délimité par le second point ($P_2$) et l'extrémité extérieure initiale ($P_0$) du spiral ; et
- donner à l'arc de cercle (18), entre les second et troisième points ($P_2$, $P_3$), une épaisseur dans le plan du spiral identique à celle du segment de spire initial (19), le segment de spire ainsi obtenu, entre les second et troisième points ($P_2$, $P_3$), constituant une partie terminale corrigée de la spire extérieure.

**23.** Procédé selon la revendication 22, **caractérisé en ce que** le second point ($P_2$) est situé à l'extrémité de la portion rigidifiée la plus éloignée de l'extrémité extérieure du spiral.

**24.** Procédé selon l'une quelconque des revendications 16 à 21, **caractérisé en ce que** pour déterminer un écart suffisant entre la partie terminale de la spire extérieure (7') et l'avant-dernière spire (9'), on met en oeuvre les étapes suivantes :

- définir un point sur la spire extérieure dans la portion rigidifiée ;
- décaler radialement vers l'extérieur la partie terminale du spiral s'étendant depuis ledit point, en donnant au côté intérieur de cette partie terminale une forme en arc de cercle ayant pour centre le centre géométrique (O) du spiral et au côté extérieur de cette partie terminale une forme donnant à cette partie terminale une épaisseur dans le plan du spiral identique à celle de la partie terminale initiale correspondante de la spire extérieure ; et
- raccorder la partie terminale avec le reste de la portion rigidifiée par une portion de raccord formant un double coude (11).

**Claims**

**1.** A timepiece movement comprising a regulating device comprising a balance (1) and a plane hairspring (2), the plane hairspring (2) comprising on its outer turn (7) a stiffened portion (8) arranged to cause the deformations of the turns to be substantially concentric, this stiffened portion (8) ending before the outer end (5) of the hairspring (2), **characterised in that** the spacing (d) between a terminal portion of the outer turn (7) and the last-but-one turn (9) of the hairspring (2) is large enough for said last-but-one turn (9) to remain free radially during expansions of the hairspring (2) up to amplitudes corresponding substantially to the maximum angle of rotation of the balance (1) in said movement.

**2.** A timepiece movement according to claim 1, **characterised in that** the maximum angle of rotation of the balance (1) in said movement is slightly less than the knocking angle.

**3.** A timepiece movement according to claim 1 or 2, **characterised in that** the maximum angle of rotation of the balance (1) in said movement is substantially equal to 330˚.

**4.** A timepiece movement according to any one of claims 1 to 3, **characterised in that** the spacing (d) between the terminal portion of the outer turn (7) and the last-but-one turn (9) of the hairspring (2) is large enough for said last-but-one turn (9) to remain free radially during expansions of the hairspring (2) up to amplitudes corresponding substantially to the knocking angle of the balance (1) in said movement.

5. A timepiece movement according to any one of claims 1 to 4, **characterised in that** the stiffened portion (8) is a portion of strip of thickness (e) in the plane of the hairspring (2) greater than the thickness ($e_0$) of the remainder of the strip forming the hairspring (2).

6. A timepiece movement according to claim 5, **characterised in that** the thickness (e), in the plane of the hairspring (2), of the stiffened portion (8) varies over the entire length of the stiffened portion (8) as a convex and continuous function and presents a minimum substantially equal to the thickness ($e_0$) of the remainder of the strip at the two ends of the stiffened portion (8) and a maximum that is greater than the thickness ($e_0$) of the remainder of the strip between said two ends.

7. A timepiece movement according to claim 5, **characterised in that** the thickness (e), in the plane of the hairspring, of the stiffened portion (8") is substantially constant over the entire length of said stiffened portion (8").

8. A timepiece movement according to claim 5, **characterised in that** the thickness (e), in the plane of the hairspring (2), of the stiffened portion (8''') is substantially constant over the entire length of said stiffened portion (8''') except in terminal portions (13) where, respectively, the thickness (e) decreases continuously towards the ends (14) of said stiffened portion (8''').

9. A timepiece movement according to any one of claims 5 to 8, **characterised in that** the extra thickness defined by the stiffened portion (8) relative to the remainder of the strip is situated exclusively on the outer side of the outer turn (7).

10. A timepiece movement according to any one of claims 5 to 9, **characterised in that** the height of the hairspring is substantially constant over the entire length of said hairspring.

11. A timepiece movement according to any one of claims 1 to 10, **characterised in that** the hairspring (2) is made of silicon.

12. A timepiece movement according to any one of claims 1 to 11, **characterised in that** the thickness of the stiffened portion (8"), or a maximum of this thickness (8; 8'; 8'''), is equal to at least three times the thickness ($e_0$) of the remainder of the strip forming the hairspring (2).

13. A timepiece movement according to any one of claims 1 to 12, **characterised in that** the stiffened portion (8) is sufficiently stiff to substantially not deform during operation of the movement, and is arranged so that the remainder of the hairspring (2), constituting the elastic portion of the hairspring (2), has a centre of gravity that is substantially coincident with the geometrical centre of the hairspring (2).

14. A timepiece movement according to any one of claims 1 to 13, **characterised in that** the hairspring (2; 2') is in the shape of an Archimedes' spiral and **in that** a segment of the outer turn (7; 7') comprising at least part of the stiffened portion (8; 8') and extending up to the outer end (5; 5') of the hairspring is distant from the last-but-one turn (9; 9') relative to the layout of the Archimedes' spiral.

15. A timepiece, such as a watch, comprising a timepiece movement according to any one of claims 1 to 14.

16. A method of making a timepiece movement comprising a regulating device having a balance (1) and a plane hairspring (2), in which method the hairspring (2) is made with a stiffened portion (8) on its outer turn (7) so as to cause the deformations of the turns to be substantially concentric, this stiffened portion (8) ending before the outer end (5) of the hairspring (2), **characterised in that** the hairspring (2) is also made with a spacing (d) between a terminal portion of the outer turn (7) and the last-but-one turn (9) of the hairspring (2) that is large enough for said last-but-one turn (9) to remain free radially during expansions of the hairspring (2) up to amplitudes corresponding substantially to the maximum angle of rotation of the balance (1) in said movement.

17. A method according to claim 16, **characterised in that** in order to design the plane hairspring (2) with the stiffened portion (8"), the following steps are performed:

    • defining a plane hairspring of constant strip thickness;

• determining the unbalance of said plane hairspring;
• determining a portion of the outer turn of said plane hairspring having the same unbalance as the plane hairspring; and
• stiffening said outer turn portion.

18. A method according to claim 17, **characterised in that** the step of stiffening the outer turn portion consists in increasing its thickness (e) in the plane of the hairspring (2).

19. A method according to claim 16, **characterised in that** in order to design the plane hairspring (2) with the stiffened portion (8), the following steps are performed:

• defining a plane hairspring of constant strip section;
• determining the unbalance of said plane hairspring;
• determining a portion of the outer turn of said plane hairspring having the same unbalance as the plane hairspring, this portion being defined by two angles $\beta_1$ and $\beta_2$ measured from the outer end of the hairspring; and
• varying the thickness (e), in the plane of the hairspring, of the strip forming the hairspring between an angle $\delta_1$ and an angle $\delta_2$ such that $\delta_1 < \beta_1$ and $\delta_2 > \beta_2$, where $\beta_2 - \beta_1$ is the angular extent of said portion of the outer turn, the thickness being caused to vary in accordance with a predetermined function f presenting a minimum substantially equal to the thickness $(e_0)$ of the remainder of the strip at the angles $\delta_1$ and $\delta_2$, the function f and the angles $\delta_1$ and $\delta_2$ being selected so that the deformation of the turn portion delimited by the angles $\delta_1$ and $\delta_2$ is substantially the same as the deformation which would occur if the thickness of the strip between the angles $\delta_1$ and $\beta_1$ and between the angles $\beta_2$ and $\delta_2$ were the same as that of the remainder of the hairspring and if, between the angles $\beta_1$ and $\beta_2$, the stiffness of the outer turn were equal to a predetermined value, greater than that of the remainder of the strip.

20. A method according to claim 19, **characterised in that** said predetermined value is infinite.

21. A method according to claim 19 or 20, **characterised in that** the predetermined function f is convex and continuous.

22. A method according to any one of claims 16 to 21, **characterised in that** in order to determine a spacing (d) that is sufficient between the terminal portion of the outer turn (7) and the last-but-one turn (9), the following steps are implemented:

• defining a first point $(P_1)$ on the radial axis passing through the outer end $(P_0)$ of an initial plane hairspring having a stiffened portion (8), the first point $(P_1)$ being situated beyond the last-but-one turn of said initial plane hairspring when said last-but-one turn is expanded by an amplitude corresponding to the maximum angle of rotation of the balance;
• defining a second point $(P_2)$ on the outer turn;
• interconnecting the first and second points $(P_1, P_2)$ by a circular arc (18) that is tangential to the outer turn at the second point $(P_2)$;
• defining a third point $(P_3)$ on the circular arc (18) between the first and second points $(P_1, P_2)$, the third point $(P_3)$ being such that the length of the segment of the circular arc (18) delimited by the second and third points $(P_2, P_3)$ is equal to the length of the initial turn segment (19) delimited by the second point $(P_2)$ and the initial outer end $(P_0)$ of the hairspring; and
• giving a thickness in the plane of the hairspring to the circular arc (18) between the second and third points $(P_2, P_3)$ that is identical to the thickness of the initial turn segment (19), the resulting turn segment between the second and third points $(P_2, P_3)$ constituting a corrected terminal portion of the outer turn.

23. A method according to claim 22, **characterised in that** the second point $(P_2)$ is situated at the end of the stiffened portion that is further from the outer end of the hairspring.

24. A method according to any one of claims 16 to 21, **characterised in that** in order to determine a spacing that is sufficient between the terminal portion of the outer turn (7') and the last-but-one turn (9'), the following steps are implemented:

• defining a point on the outer turn in the stiffened portion;
• offsetting the terminal portion of the hairspring extending from said point radially outwards by giving the inner side of said terminal portion a circularly-arcuate shape the centre of which is the geometrical centre (O) of the hairspring and the outer side of said terminal portion a shape that gives said terminal portion a thickness in the plane of the hairspring that is identical to the thickness of the corresponding initial terminal portion of the outer turn; and

• connecting the terminal portion with the remainder of the stiffened portion by a connection portion that forms a double bend (11).

**Patentansprüche**

1. Uhrwerk, das ein Regulierorgan umfasst, das eine Unruh (1) und eine ebene Spiralfeder (2) umfasst, wobei die ebene Spiralfeder (2) auf ihrer Außenwindung (7) einen versteiften Abschnitt (8) umfasst, der gestaltet ist, um die Verformungen der Windungen im Wesentlichen konzentrisch zu machen, wobei dieser versteifte Abschnitt (8) vor dem äußeren Ende (5) der Spiralfeder (2) endet, **dadurch gekennzeichnet, dass** der Abstand (d) zwischen einem Endabschnitt der Außenwindung (7) und der vorletzten Windung (9) der Spiralfeder (2) ausreichend groß ist, damit diese vorletzte Windung (9) bei Ausdehnungen der Spiralfeder (2), die bis zu Amplituden reichen, die im Wesentlichen dem maximalen Drehwinkel der Unruh (1) in dem Uhrwerk entsprechen, radial frei bleibt.

2. Uhrwerk nach Anspruch 1, **dadurch gekennzeichnet, dass** der maximale Drehwinkel der Unruh (1) in dem Uhrwerk etwas kleiner ist als der Prellwinkel.

3. Uhrwerk nach Anspruch 1 oder 2, **dadurch gekennzeichnet, dass** der maximale Drehwinkel der Unruh (1) in dem Uhrwerk im Wesentlichen gleich 330˚ ist.

4. Uhrwerk nach einem der Ansprüche 1 bis 3, **dadurch gekennzeichnet, dass** der Abstand (d) zwischen dem Endabschnitt der Außenwindung (7) und der vorletzten Windung (9) der Spiralfeder (2) ausreichend groß ist, damit diese vorletzte Windung (9) bei Ausdehnungen der Spiralfeder (2), die bis zu Amplituden reichen, die im Wesentlichen dem Prellwinkel der Unruh (1) in dem Uhrwerk entsprechen, radial frei bleibt.

5. Uhrwerk nach einem der Ansprüche 1 bis 4, **dadurch gekennzeichnet, dass** der versteifte Abschnitt (8) ein Blattabschnitt ist, dessen Dicke (e) in der Ebene der Spiralfeder (2) größer ist als diejenige ($e_0$) des Rests des Blatts, das die Spiralfeder (2) bildet.

6. Uhrwerk nach Anspruch 5, **dadurch gekennzeichnet, dass** die Dicke (e) des versteiften Abschnitts (8) in der Ebene der Spiralfeder (2) über die gesamte Länge des versteiften Abschnitts (8) wie eine konvexe und stetige Funktion variiert und an den zwei Enden des versteiften Abschnitts (8) ein Minimum, das im Wesentlichen gleich der Dicke ($e_0$) des Rests des Blattes ist, und zwischen den zwei Enden ein Maximum aufweist, das größer ist als die Dicke ($e_0$) des Rests des Blattes.

7. Uhrwerk nach Anspruch 5, **dadurch gekennzeichnet, dass** die Dicke (e) des versteiften Abschnitts (8") in der Ebene der Spiralfeder über die gesamte Länge des versteiften Abschnitts (8")im Wesentlichen konstant ist.

8. Uhrwerk nach Anspruch 5, **dadurch gekennzeichnet, dass** die Dicke (e) des versteiften Abschnitts (8"') in der Ebene der Spiralfeder (2) über die gesamte Länge des versteiften Abschnitts (8"') bis auf in Endabschnitten (13), wo die Dicke (e) jeweils kontinuierlich in der Richtung der Enden (14) des versteiften Abschnitts (8"') abnimmt, im Wesentlichen konstant ist.

9. Uhrwerk nach einem der Ansprüche 5 bis 8, **dadurch gekennzeichnet, dass** die Überdicke, die der versteifte Abschnitt (8) in Bezug auf den Rest des Blattes definiert, sich ausschließlich auf der Außenseite der Außenwindung (7) befindet.

10. Uhrwerk nach einem der Ansprüche 5 bis 9, **dadurch gekennzeichnet, dass** die Höhe der Spiralfeder über die gesamte Länge der Spiralfeder im Wesentlichen konstant ist.

11. Uhrwerk nach einem der Ansprüche 1 bis 10, **dadurch gekennzeichnet, dass** die Spiralfeder (2) aus Silicium besteht.

12. Uhrwerk nach einem der Ansprüche 1 bis 11, **dadurch gekennzeichnet, dass** die Dicke des versteiften Abschnitts (8") oder ein Maximum dieser Dicke (8; 8'; 8"') mindestens gleich dem Dreifachen der Dicke ($e_0$) des Rests des

Blattes ist, das die Spiralfeder (2) bildet.

13. Uhrwerk nach einem der Ansprüche 1 bis 12, **dadurch gekennzeichnet, dass** der versteifte Abschnitt (8) steif genug ist, um sich während des Laufens des Uhrwerks nahezu nicht zu verformen, und derart gestaltet ist, dass der Rest der Spiralfeder (2), der den elastischen Abschnitt der Spiralfeder (2) bildet, einen Schwerpunkt aufweist, der im Wesentlichen mit dem geometrischen Mittelpunkt der Spiralfeder (2) übereinstimmt.

14. Uhrwerk nach einem der Ansprüche 1 bis 13, **dadurch gekennzeichnet, dass** die Spiralfeder (2; 2') die Form einer archimedischen Spirale aufweist und dadurch, dass ein Abschnitt der Außenwindung (7; 7'), der mindestens einen Teil des versteiften Abschnitts (8; 8') umfasst und sich bis zum Außenende (5; 5') der Spiralfeder erstreckt, von der vorletzten Windung (9; 9') in Bezug auf den Verlauf der archimedischen Spirale entfernt ist.

15. Uhr, wie eine Kleinuhr, die ein Uhrwerk nach einem der Ansprüche 1 bis 14 umfasst.

16. Verfahren zum Ausführen eines Uhrwerks, das ein Regulierorgan mit Unruh (1) und ebener Spiralfeder (2) umfasst, wobei gemäß dem Verfahren die Spiralfeder (2) auf ihrer Außenwindung (7) mit einem versteiften Abschnitt (8) ausgeführt wird, um die Verformungen der Windungen im Wesentlichen konzentrisch zu machen, wobei dieser versteifte Abschnitt (8) vor dem äußeren Ende (5) der Spiralfeder (2) endet, **dadurch gekennzeichnet, dass** die Spiralfeder (2) ferner mit einem Abstand (d) zwischen einem Endabschnitt der Außenwindung (7) und der vorletzten Windung (9) der Spiralfeder (2) ausgeführt wird, der ausreichend groß ist, damit diese vorletzte Windung (9) bei Ausdehnungen der Spiralfeder (2), die bis zu Amplituden reichen, die im Wesentlichen dem maximalen Drehwinkel der Unruh (1) im Uhrwerk entsprechen, radial frei bleibt.

17. Verfahren nach Anspruch 16, **dadurch gekennzeichnet, dass** zum Konstruieren der ebenen Spiralfeder (2) mit dem versteiften Abschnitt (8") die folgenden Schritte ausgeführt werden:

   - Definieren einer ebenen Spiralfeder mit konstantem Blattquerschnitt,
   - Bestimmen der Unwucht dieser ebenen Spiralfeder,
   - Bestimmen eines äußeren Spiralfederabschnitts dieser ebenen Spiralfeder, der dieselbe Unwucht aufweist wie die ebene Spiralfeder, und
   - Versteifen dieses äußeren Spiralfederabschnitts.

18. Verfahren nach Anspruch 17, **dadurch gekennzeichnet, dass** der Schritt des Versteifens des äußeren Spiralfederabschnitts in der Erhöhung seiner Dicke (e) in der Ebene der Spiralfeder (2) besteht.

19. Verfahren nach Anspruch 16, **dadurch gekennzeichnet, dass** zum Konstruieren der ebenen Spiralfeder (2) mit dem versteiften Abschnitt (8) die folgenden Schritte durchgeführt werden:

   - Definieren einer ebenen Spiralfeder mit konstantem Blattquerschnitt,
   - Bestimmen der Unwucht dieser ebenen Spiralfeder,
   - Bestimmen eines äußeren Spiralfederabschnitts dieser ebenen Spiralfeder, der dieselbe Unwucht wie die ebene Spiralfeder aufweist, wobei dieser Abschnitt durch zwei Winkel $\beta_1$ und $\beta_2$ definiert ist, die ausgehend von dem äußeren Ende der Spiralfeder gemessen werden, und
   - die Dicke (e) des Blatts, das die Spiralfeder bildet, zwischen einem Winkel $\delta_1$ und einem Winkel $\delta_1$, die derart sind, dass $\delta_1 < \beta_1$ und $\delta_2 > \beta_2$, wo $\beta_2 - \beta_1$ die Winkelausdehnung des äußeren Spiralfederabschnitts ist, in der Ebene der Spiralfeder gemäß einer vorbestimmten Funktion f variiert wird, die ein Minimum aufweist, das im Wesentlichen gleich der Dicke ($e_0$) des Rests des Blattes an den Winkeln $\delta_1$ und $\delta_2$ ist, wobei die Funktion f und die Winkel $\delta_1$ und $\delta_2$ derart ausgewählt werden, dass die Verformung des Spiralfederabschnitts, der durch die Winkel $\delta_1$ und $\delta_2$ begrenzt wird, im Wesentlichen gleich derjenigen ist, die eintreten würde, wenn die Dicke des Blatts zwischen den Winkeln $\delta_1$ und $\beta_1$ und zwischen den Winkeln $\beta_2$ und $\delta_2$ dieselbe wäre wie diejenige des Rests der Spiralfeder und wenn die Steifigkeit der Außenwindung zwischen den Winkeln $\beta_1$ und $\beta_2$ gleich einem vorbestimmten Wert wäre, der größer als derjenige des Rests des Blattes ist.

20. Verfahren nach Anspruch 19, **dadurch gekennzeichnet, dass** der vorbestimmte Wert unendlich ist.

21. Verfahren nach Anspruch 19 oder 20, **dadurch gekennzeichnet, dass** die vorbestimmte Funktion f konvex und stetig ist.

**22.** Verfahren nach einem der Ansprüche 16 bis 21, **dadurch gekennzeichnet, dass** zum Bestimmen eines ausreichenden Abstands (d) zwischen dem Endabschnitt der Außenwindung (7) und der vorletzten Windung (9) die folgenden Schritte durchgeführt werden:

- Definieren eines ersten Punkts ($P_1$) auf der radialen Achse, die durch das äußere Ende ($P_0$) einer anfänglichen ebenen Spiralfeder mit versteiften Abschnitt (8) verläuft, der sich jenseits der vorletzten Windung dieser anfänglichen ebenen Spiralfeder befindet, wenn diese vorletzte Spiralfeder sich in einer Ausdehnung befindet, deren Amplitude dem maximalen Drehwinkel der Unruh entspricht;
- Definieren eines zweiten Punkts ($P_2$) auf der Außenwindung;
- Verbinden des ersten und des zweiten Punkts ($P_1$, $P_2$) durch einen Kreisbogen (18), der die Außenwindung im Bereich des zweiten Punkts ($P_2$) tangiert;
- Definieren eines dritten Punkts ($P_3$) auf dem Kreisbogen (18) zwischen dem ersten und dem zweiten Punkt ($P_1$, $P_2$), wobei dieser dritte Punkt ($P_3$) derart ist, dass die Länge des Kreisbogenabschnitts (18), der durch den zweiten und den dritten Punkt ($P_2$, $P_3$) abgegrenzt wird, gleich der Länge des anfänglichen Windungsabschnitts (19) ist, der durch den zweiten Punkt ($P_2$) und das anfängliche äußere Ende ($P_0$) der Spiralfeder begrenzt ist; und
- Herstellen des Kreisbogens (18) zwischen dem zweiten und dem dritten Punkt ($P_2$, $P_3$) mit einer Dicke in der Ebene der Spiralfeder, die identisch mit derjenigen des anfänglichen Windungsabschnitts (19) ist, wobei der so erhaltene Windungsabschnitt zwischen dem zweiten und dem dritten Punkt ($P_2$, $P_3$) einen korrigierten Endabschnitt der Außenwindung bildet.

**23.** Verfahren nach Anspruch 22, **dadurch gekennzeichnet, dass** der zweite Punkt ($P_2$) sich an dem Ende des versteiften Abschnitts befindet, das am weitesten von dem äußeren Ende der Spiralfeder entfernt ist.

**24.** Verfahren nach einem der Ansprüche 16 bis 21, **dadurch gekennzeichnet, dass** zum Bestimmen eines ausreichenden Abstands zwischen dem Endabschnitt der Außenwindung (7') und der vorletzten Windung (9') die folgenden Schritte durchgeführt werden:

- Bestimmen eines Punkts auf der Außenwindung im versteiften Abschnitt;
- radiales Versetzen des Endabschnitts der Spiralfeder, der sich von dem Punkt aus erstreckt, nach außen, indem der Innenseite dieses Endabschnitts die Form eines Kreisbogens, dessen Mittelpunkt der geometrische Mittelpunkt (O) der Spiralfeder ist, und der Außenseite dieses Endabschnitts eine Form verliehen wird, die diesem Endabschnitt in der Ebene der Spiralfeder eine Dicke verleiht, die identisch mit derjenigen des entsprechenden anfänglichen Endabschnitts der Außenwindung ist; und
- Verbinden des Endabschnitts mit dem Rest des versteiften Abschnitts durch einen Anschlussabschnitt, der einen Doppelknick (11) bildet.

**Fig.1**

Fig.2

Fig.3

Fig.4

Fig.5

**Fig.6**

## Fig.7

EP 2 224 293 B1

## Fig.8

24

Fig.9

## Fig.10

## Fig.11

## Fig.12

Fig.13

Fig.14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0732635 A